# EUROPEAN PATENT SPECIFICATION

(11) **EP 3 795 333 B1**
(45) Date of publication and mention of the grant of the patent: **16.08.2023**
(21) Application number: 20193223.3
(22) Date of filing: 27.08.2020
(51) Int. Cl.: B29C 63/34, B29C 31/00, B29C 43/48, B29C 63/48

(54) **DEVICE FOR PREPARING LINER**
VORRICHTUNG ZUR HERSTELLUNG EINER AUSKLEIDUNG
DISPOSITIF DE PRÉPARATION DE REVÊTEMENT

(30) Priority: 28.08.2019 FI 20195708
(43) Date of publication of application: 24.03.2021
(73) Proprietor: Picote Solutions Oy Ltd, 06450 Porvoo (FI)
(72) Inventor: Lokkinen, Mika, 10130 Tallinn (EE)
(74) Representative: Wilenius, Jami Juhani

(56) References cited:
- WO-A1-02/055286
- US-A- 4 128 369
- US-A1- 2011 120 836
- US-B1- 6 500 298
- US-B1- 10 308 438

## Description

### FIELD OF THE INVENTION

The invention relates to a device for spreading epoxy evenly inside a liner used in pipe renovations.

### PRIOR ART

The pipes in real estate properties are, increasingly more often, renovated by the so-called CIPP (Cured-in-Place Pipe) method, in which inside the pipes is installed an epoxy-saturated liner, which is slid into the pipe by the inversion method using air pressure. Before installation, the outer surface of the liner is formed by an impenetrable plastic membrane and the inner surface by an absorbent material, usually felt or fabric. Into the liner is introduced epoxy in liquid form and the liner is mangled until the epoxy has spread and soaked evenly into the inside surface of the liner, after which the liner is reeled into a CIPP lining drum. In inversion, compressed air in the CIPP lining drum causes the inside of the liner in the CIPP lining drum to invert in the pipeline as the outer surface of the liner, wherein the epoxy in the outer surface adheres to the inner surface of the pipe. Once the liner is fully inverted from the CIPP lining drum into the pipe, air pressure is maintained until the epoxy has cured and the liner forms a new pipe inside the old pipe.

A disadvantage in the arrangement are the mangles according to prior art, which are heavy and require electrical outlet to power a motor of the mangle, thus they are to be fixedly installed. Preparation of the liner must then be performed in a car or a worksite container, into which the mangle is installed.

US 6,500,298 B1 discloses an apparatus for automatic removal of a protective cover from a planar sheet. The planar sheet travels between belts driven by pulleys.

WO 02/055286 A1 discloses a machine that peels a protective film from a printed circuit board. The circuit board travels between belts driven by pulleys.

US 10,308,438 B1 discloses a control apparatus for use with a stone spreader vehicle. The control apparatus has an endless belt supported about a plurality of rollers.

Another prior art device for this purpose is a wooden rolling pin known from the art of baking. This solution has a usability problem since both hands are needed for operating the rolling pin. Another problem is that it results an uneven layer of epoxy, i.e. varying thickness in the prepared liner.

### BRIEF DESCRIPTION OF THE INVENTION

The object of the invention is a device, which alleviates or removes the disadvantages of mangles according to prior art.

Object of the invention is achieved with a device having a top part and a bottom part, both having rollers and a belt running on the rollers. One of the rollers of the bottom part is a pulley roller driving the belt of the bottom part when rotated. The rollers of the top part can be idle rollers. The belt is tensioned with at least one of the top rollers and at least one of the bottom rollers being movably attached to the device. Preferably the device has no motor in itself but an input shaft from which the device can be operated by rotating the input shaft with e.g. a cordless drill or a power drill.

### BRIEF DESCRIPTION OF THE FIGURES

The invention is now described in more detail in connection with preferred embodiments, with reference to the accompanying drawings, in which:
Fig. 1 shows a device having a top part opened according to an embodiment;
Fig. 2 is an isometric view of a device according to an embodiment;
Fig. 3 is an isometric view of the device of Figure 2 from opposite side;
Fig. 4 shows a device according to an embodiment seen from above;
Fig. 5 is a section view of Section A-A shown in Figure 4;
Fig. 6 is an isometric section view of a device according to an embodiment; and
Fig. 7 is an isometric section view of a device of Figure 6 from a different angle of view.

### DETAILED DESCRIPTION OF THE INVENTION

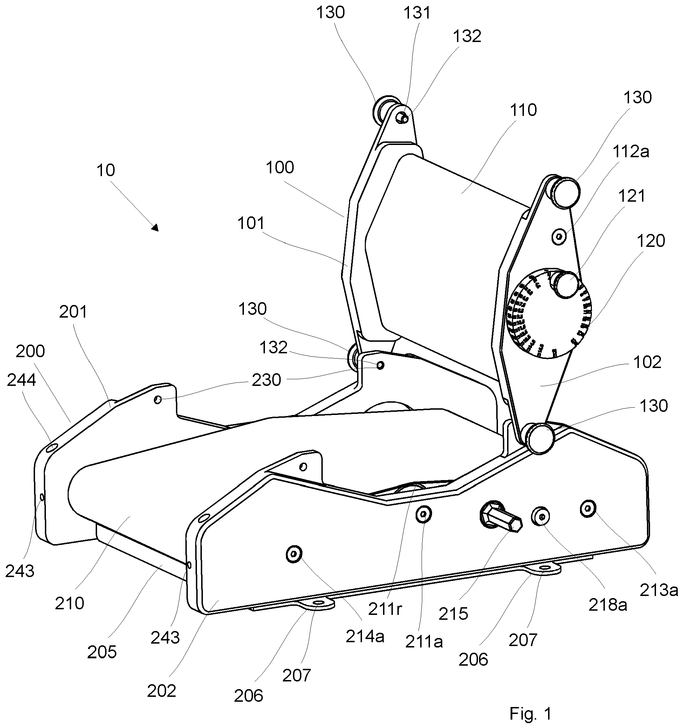

Figures 1 to 7 can all be seen as illustrating the same embodiment of the invention or two or more alternative embodiments of the invention.

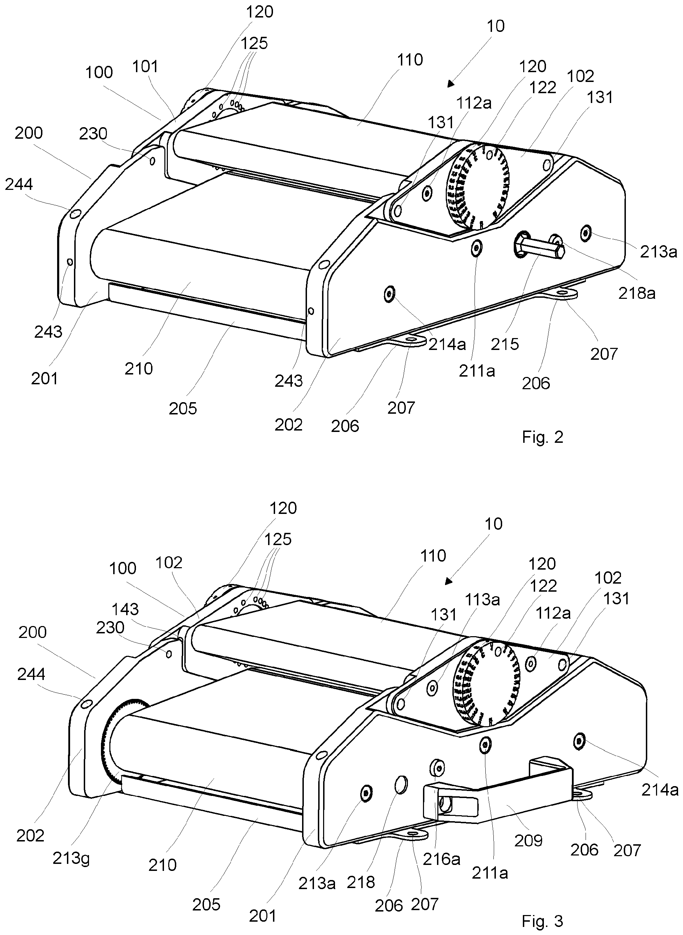

Figure 1 shows on embodiment of a device 10 that is designed for preparing a liner to be installed in a pipe. In Figure 1 a top part 100 is in a open position whereas in Figures 2 to 7 the top part 100 is in a closed position.

A device 10 for preparing a liner to be installed in a pipe comprises a top part 100 having two or more top rollers 111r, 112r, 113r extending between a first top side 101 and a second top side 102. The device has a top belt 110 arranged on the top rollers 111r, 112r, 113r. The top belt runs around the top rollers like a conveyor belt, moving when any of the top rollers is rotated.

The device further comprises a bottom part 200 having two or more bottom rollers 211r, 212r, 213r extending between a first bottom side 201 and a second bottom side 202. The device has a bottom belt 210 arranged on the bottom rollers 211r, 212r, 213r. At least one of the bottom rollers 211r, 212r, 213r is a pulley roller 213r configured to drive the bottom belt 210 when rotated. The bottom belt runs around the bottom rollers like a conveyor belt, moving when the pulley roller or any other bottom roller is rotated.

For adjusting tightness of the top belt 110, at least one roller of the top rollers 111r, 112r, 113r is movably attached to the first top side 101 and the second top side 102. Similarly, for adjusting tightness of the bottom belt 210, at least one roller of the bottom rollers 211r, 212r, 213r is movably attached to the first bottom side 201 and the second bottom side 202.

Preferably the two or more top rollers 111r, 112r, 113r comprise a main top roller 111r and two auxiliary top rollers 112r, 113r on different sides of the main top roller 111r. One auxiliary top roller 113r is then movably attached to the first top side 101 and the second top side 102 and configured to be movable towards and away from the other auxiliary top roller 112r.

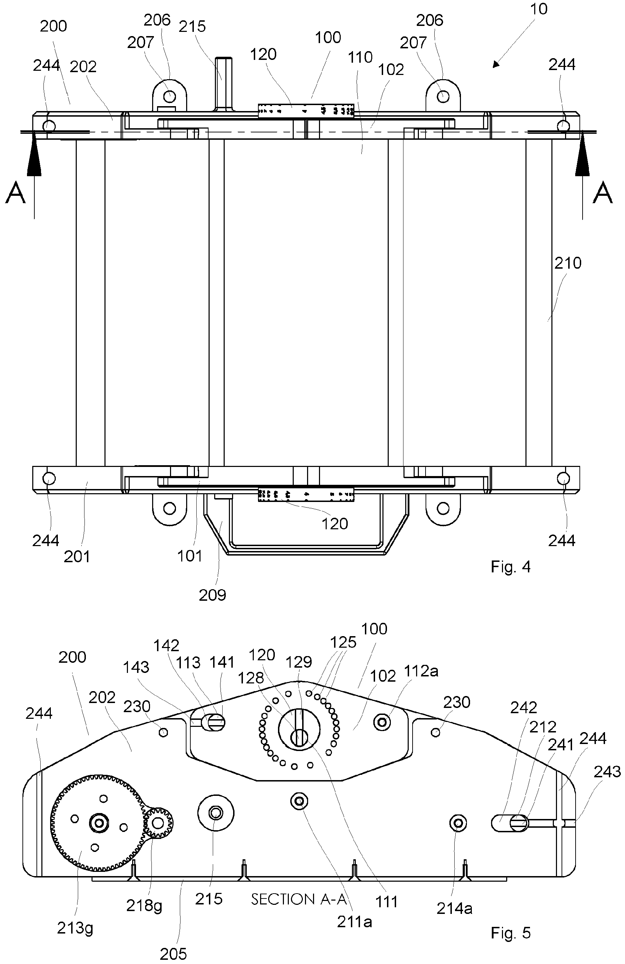

An embodiment of the movable attachment is best shown in Figure 5. The movably attached auxiliary top roller 113r rotates about a shaft 113 having its ends in slots 142 of the top sides 101, 102. The shaft ends are accessible through cavities 143 extending from periphery of the top sides into the slots 142. The shaft ends have a cavity or a through hole 141 which is preferably threaded. The position of the shaft ends in the slots can be adjusted with e.g. grub screws, set screws or other headless screws through said through hole 141 for moving the shaft 113 and thereby moving said auxiliary top roller 113r. Direction of movement of the auxiliary top roller 113r is horizontal in Figure 5, i.e. directly towards or away from the other auxiliary top roller 112r.

Preferably two or more bottom rollers 211r, 212r, 213r comprise a main bottom roller 211r, an auxiliary bottom roller 212r and the pulley roller 213r. The auxiliary bottom roller 212r and the pulley roller 213r being located on different sides of the main bottom roller 211r. The auxiliary bottom roller 212r is movably attached to the first bottom side 201 and the second bottom side 202 and configured to be movable towards and away from the pulley roller 213r.

An embodiment of the movable attachment of the auxiliary bottom roller 212r is best shown in Figure 5. The movably attached auxiliary bottom roller 212r rotates about a shaft 212 having its ends in slots 242 of the bottom sides 201, 202. The shaft ends are accessible through cavities 243 extending from periphery of the bottom sides into the slots 242. The shaft ends have a cavity or a through hole 241 which is preferably threaded. The position of the shaft ends in the slots can be adjusted with e.g. grub screws, set screws or other headless screws through said through hole 241 for moving the shaft 212 and thereby moving said auxiliary bottom roller 212r. Direction of movement of the auxiliary bottom roller 212r is horizontal in Figure 5, i.e. directly towards or away from the pulley roller 213r. Vertical cavities 244 can be used for attaching a liner support or a funnel to the device 10 for facilitating pouring of epoxy into the liner.

In an embodiment the two or more top rollers 111r, 112r, 113r comprise a main top roller 111r and the two or more bottom rollers 211r, 212r, 213r comprise a main bottom roller 211r. The main top roller 111r, the main bottom roller 211r or both of them are movably attached to the device and are configured to be movable towards each other and away from each other to adjust a gap between the main top roller and the main bottom roller. This gap defines a thickness of a liner prepared with the device.

An embodiment of the movably attached main top roller 111r is best shown in Figures 1 and 5. The main top roller 111r is arranged to rotate about a shaft 111 which is eccentrically attached to a rotatable dial 120 of the top part 100, e.g. by having a threaded hole 129 in the dial and a threaded through hole 128 near the end of the shaft 111 and a grub screw, a set screw or other headless screw through said holes 128, 129 locking the shaft to the dial. The gap between the main top roller 111r and the main bottom roller 211r is thereby configured to be adjusted by rotating said dial 120. The adjusting mechanism may have certain predefined gaps configured therein. For example, one or both of the top sides 101, 102 can have cavities or apertures 125 provided therein and a through hole 122 provided on the dial 120. The apertures 125 of the top sides and the through hole 122 of the dial are configured to receive a pin of a knob 121 which locks the position of the dial 120. Removing the knob 121 allows a user to rotate to the dial 120 to adjust the gap which can be locked again by inserting the knob 121.

As described, each of the movably attached auxiliary rollers 113r, 212r rotate about a shaft 113, 212 having its ends in slots 142, 242 of the top sides 101, 102 or the bottom sides 201, 202. The said shaft ends are accessible through cavities 143, 243 for moving the shaft 113, 212 and thereby moving said auxiliary rollers 113r, 212r. This can be achieved e.g. with screws through said holes 141, 241 at the shaft ends for moving the shafts 113, 212 and thereby moving said auxiliary rollers 113r, 212r for tightening the top belt 110 and the bottom belt 210.

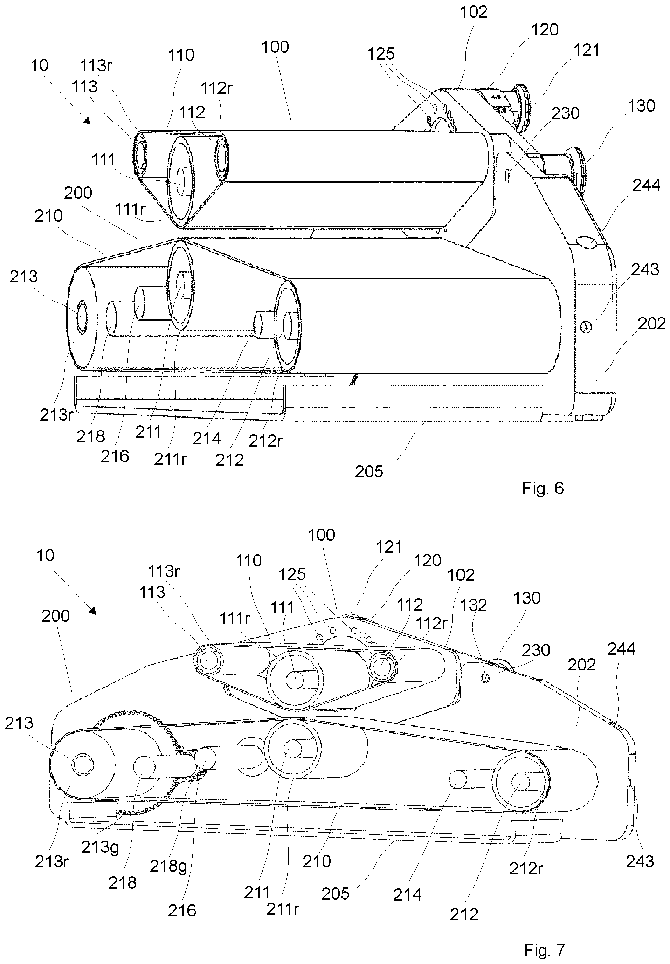

For moving the bottom belt 210, the pulley roller 213r of the bottom part 200 is connected to a drive shaft 216 by gears 213g, 218g and the drive shaft 216 is arranged to be rotated through the first bottom side 201 or the second bottom side 202. In addition to the gears 213g, 218g shown in Figures 5 and 7, there are also gears on the opposite end of the drive shaft 216 and shaft 218, i.e. on the first bottom side 201. In this embodiment rotation of an input shaft 215 directly rotates the drive shaft 216. A gear at an end of the drive shaft 216, opposite to the input shaft 215 couples to a gear at an end of the shaft 218 thereby coupling the rotation of the input shaft 215 to the shaft 218. The gear 218g on the second bottom side 202 end of the shaft 218 couples to the gear 213g of the pulley shaft 213 fixed to the pulley roller 213r and thus the rotation of the input shaft 215 rotates the pulley roller 213r and thereby moves the bottom belt 210. In an embodiment the shaft 218 could be omitted or replaced with drive shaft 216 and gear of the drive shaft 216 would directly couple to the gear 213g of the pulley shaft 213. The pulley shaft 213 can also be non-rotating and the gear 213g directly attached to the pulley roller 213r. Also other similar arrangements can be used for transferring rotational movement of the input shaft 215 to rotational movement of the pulley roller 213r. Preferably the drive shaft 216 is connected to the input shaft 215 through the first bottom side 201 or the second bottom side 202 and the input shaft is configured to be rotated with a cordless drill or a power drill.

Preferably all rollers of the device 10 rotate about corresponding shaft or with the shaft. Preferably suitable bearings are used between non-rotating shafts and rotating rollers. In the embodiment of Figures 6 and 7 for example, the top part 100 has a main top roller 111r rotating about a shaft 111 and two auxiliary top rollers 112r, 113r rotating about shafts 112, 113. Similarly, the bottom part 200 has a main bottom roller 2 11r rotating about a shaft 211, a pulley roller 213r rotating about a pulley shaft 213 or with the pulley shaft 213, and an auxiliary bottom roller 212r rotating about a shaft 212. In addition, the bottom part has a drive shaft 216 and two other shafts 214, 218 without any rollers. The shafts can be fixed to the bottom sides and top sides by e.g. bolts 211a, 213a, 214a, 216a, 218a, 112a, 113a. The additional shafts 214, 218 increase structural strength of the bottom part together with a base plate 205 extending between and attached to the first and second bottom sides 201, 202. Preferably the base plate also has extensions 206 on the exterior side of the bottom side parts. The extensions have preferably apertures 207 for fixing the device e.g. to a table or a countertop. The device may also have a handle 209 as an extension of the base plate 205 or as a separate entity. The handle 209 is preferably located on an exterior surface of one or both of the bottom sides 201, 202.

In an embodiment the device has a top part 100 that is removably attached to the bottom part 200. Said attachment can be realized by using quick-release mechanisms 130, 131, 132 on the first top side 101 and on the second top side 201. An example of the quick-release mechanism is best shown in Figure 1 where a knob 130 has a pin 131 extending through an aperture 132 of the first top side 101. These quick-release mechanisms also function as releasable hinges. Similar quick-release mechanism is also on the opposite end of the first top side 101 and on corresponding locations on the second top side 102. The pins 131 of the quick-release mechanism are configured to be inserted in apertures 230 of the first and second bottom sides 201, 202. In Figure 1, the quick-release mechanism has been released from the left-hand side leaving the right-hand side mechanism to act as a hinge and the top part 100 has been opened into a vertical position. This position already greatly increases the gap between the bottom belt 210 and the top belt 110 and thereby facilitates inserting of a liner to be treated between the belts 110, 210. If the quick-release mechanism on the right-hand side (in Fig. 1) would also be opened, it would allow full removal of the top part 100 from the device 10.

In an embodiment the top part 100 is removably attached to the bottom part 200 using releasable hinges 130, 131, 132, 230 between said top part 100 and the bottom part 200, as seen in e.g. Figure 1. Preferably said quick-release mechanisms and said releasable hinges comprise apertures 131 on the top part 100, apertures 230 on the bottom part and pins 132. Each pin 132 extends through said aperture 131 on the top part 100 and is configured to be inserted into said aperture 230 on the bottom part 200 and removed from said aperture 230 on the bottom part 200. In a preferred example of this embodiment, the top part 100 comprises four apertures 131, two on the first top side 101 and two on the second top side 102. The apertures 131 are located further away from the main top roller 111r than any of the top rollers 111r, 112r, 113r.

In an embodiment of the device of the present disclosure, the top belt 110, the bottom belt 210 or both the top belt and the bottom belt have an anti-slip coating on the inside surface facing rollers 111r, 112r, 113r, 211r, 212r, 213r, on the outside surface or both the inside surface and the outside surface. The anti-slip coating on the inside surface increases friction between the belts and the rollers which is especially important with the pulley roller 213r which moves the bottom belt 210. On the other hand, the anti-slip coating can also be important on the outside surface where it increases friction between the belts and a liner to be prepared with the device. It is important that the liner moves together with the belt without slipping in order to avoid any damage to the liner. The anti-slip coating can comprise silicone, rubber or polyurethane, or other substances which increase friction between the belts and the rollers or belts and the liner to be prepared.

In an embodiment of the device of the present disclosure, the top belt 110 and the bottom belt 210 can be fully or mainly made out of e.g. polyester, polyamide, silicone, polyurethane or coated fabric. Thickness of the belts is preferably from 0,5 mm to 3 mm, more preferably about 1 mm. The belts can be non-elastic or have some elasticity. Preferably the bottom belt 210 is elastic having effective pull at 1% elongation (k_{1%} relaxed) from 0,02 N/mm width to 0,5 N/mm width, and more preferably from 0,05 N/mm width to 0,15 N/mm width, established in line with ISO 21181:2005. In an embodiment, the top belt 110 is made of PVC and the bottom belt is a belt from Siegling Transilon elastic belt "UU 20U-NA FSTR/FSTR white FDA", article number 995385.

It is obvious to the skilled person in the art that, as technology develops, the basic idea of the invention can be implemented in various ways. The invention and its embodiments are therefore not limited to only the examples presented above, rather they may vary within the scope of the claims.

## Claims

1. A device (10) for preparing a liner to be installed in a pipe, the device comprising a top part (100) having a main top roller (111r) and two auxiliary top rollers (112r, 113r) on different sides of the main top roller (111r), the top rollers (111r, 112r, 113r) extending between a first top side (101) and a second top side (102) and having a top belt (110) arranged on the top rollers (111r, 112r, 113r), the device further comprising a bottom part (200) having a main bottom roller (211r), an auxiliary bottom roller (212r) and a pulley roller (213r), said auxiliary bottom roller (212r) and the pulley roller (213r) being located on different sides of the main bottom roller (211r), the bottom rollers (211r, 212r, 213r) extending between a first bottom side (201) and a second bottom side (202) and having a bottom belt (210) arranged on the bottom rollers (211r, 212r, 213r), where the pulley roller (213r) is configured to drive the bottom belt (210) when rotated, **characterized in that** one auxiliary top roller (113r) rotates about a shaft (113) having its ends in slots (142) of the top sides (101, 102), wherein said shaft ends are accessible through cavities (143) for moving the shaft (113) and thereby moving said auxiliary top roller (113r) towards and away from the other auxiliary top roller (112r), and the auxiliary bottom roller (212r) rotates about a shaft (212) having its ends in slots (242) of the bottom sides (201, 202), wherein said shaft ends are accessible through cavities (243) for moving the shaft (212) and thereby moving said auxiliary bottom roller (212r) towards and away from the pulley roller (213r).

2. A device according to claim 1, **characterized in that** the main top roller (111r), the main bottom roller (211r) or both of them are movably attached to the device and are configured to be movable towards each other and away from each other to adjust a gap between the main top roller and the main bottom roller.

3. A device according to claim 2, **characterized in that** the main top roller (111r) is arranged to rotate about a shaft (111) which is eccentrically attached to a rotatable dial (120) of the top part (100), wherein the gap between the main top roller (111r) and the main bottom roller (211r) is configured to be adjusted by rotating said dial (120).

4. A device according to any one of the preceding claims, **characterized in that** the pulley roller (213r) is connected to a drive shaft (216) by gears (213g, 218g) and the drive shaft (216) is arranged to be rotated through the first bottom side (201) or the second bottom side (202).

5. A device according to claim 4, **characterized in that** drive shaft (216) is connected to an input shaft (215) through the first bottom side (201) or the second bottom side (202) and the input shaft is configured to be rotated with a cordless drill or a power drill.

6. A device according to any one of the preceding claims, **characterized in that** the top part (100) is removably attached to the bottom part (200) using quick-release mechanisms (130, 131, 132) on the first top side (101) and on the second top side (201).

7. A device according to any one of the preceding claims, **characterized in that** the top part (100) is removably attached to the bottom part (200) using releasable hinges (130, 131, 132, 230) between said top part (100) and the bottom part (200).

8. A device according to claim 6 or 7, **characterized in that** said quick-release mechanisms and said releasable hinges comprise apertures (131) on the top part (100), apertures (230) on the bottom part and pins (132), each pin (132) extending through said aperture (131) on the top part (100) and configured to be inserted into said aperture (230) on the bottom part (200) and removed from said aperture (230) on the bottom part (200).

9. A device according to claim 8, **characterized in that** the top part (100) comprises four apertures (131), two on the first top side (101) and two on the second top side (102), said apertures (131) being located further away from the main top roller (111r) than any of the top rollers (111r, 112r, 113r).

10. A device according to any one of the preceding claims, **characterized in that** the top belt (110) or the bottom belt (210) has an anti-slip coating on the inside surface facing rollers (111r, 112r, 113r, 211r, 212r, 213r), on the outside surface or both the inside surface and the outside surface.

11. A device according to claim 10, **characterized in that** the anti-slip coating comprises silicone, rubber or polyurethane.

## Patentansprüche

1. Vorrichtung (10} zur Vorbereitung einer Beschichtung, die in ein Rohr eingebaut werden soll, wobei die Vorrichtung einen oberen Teil (100) mit einer Hauptoberrolle (111r) und zwei Hilfsoberrollen (112r, 113r) auf verschiedenen Seiten der Hauptoberrolle (111r) umfasst, wobei sich die Oberrollen (111r, 112r, 113r) zwischen einer ersten Oberseite (101) und einer zweiten Oberseite (102) erstrecken und einen Oberriemen (110) auf den Oberrollen (111r, 112r, 113r) umfasst, wobei die Vorrichtung weiterhin einen unteren Teil (200) mit einer Hauptunterrolle (211r), einer Hilfsunterrolle (212r) und einer Riemenscheibenrolle (213r) umfasst, wobei die Hilfsunterrolle (212r) und die Riemenscheibenrolle (213r) auf unterschiedlichen Seiten der Hauptunterrolle (211r) angeordnet ist, wobei sich die Unterrollen (211r, 212r, 213r) zwischen einer ersten unteren Seite (201) und einer zweiten unteren Seite (202) erstrecken und einen unteren Riemen (210) auf den Unterrollen (211r, 212r, 213r) umfasst, wobei die Riemenscheibenrolle (213r) so ausgelegt ist, dass sie bei ihrer Drehung den unteren Riemen (210) antreibt,
**dadurch gekennzeichnet, dass** eine Hilfsoberrolle (113r) auf einer Welle (113) mit ihren Enden in Schlitzen (142) der oberen Seiten (101, 102) rotiert, wobei die Wellenenden durch Hohlräume (143) zugänglich sind, um die Welle (113) und dadurch die Hilfsoberrolle (113r) nach und von der anderen Hilfsoberrolle (112r) zu bewegen, und die Hilfsunterrolle (212r) auf einer Welle (212) mit ihren Enden in Schlitzen (242) der unteren Seiten (201, 202) rotiert, wobei die Wellenenden durch Hohlräume (243) zugänglich sind, um die Welle (212) und dadurch die Hilfsunterrolle (212r) nach und von Riemenscheibenrolle (213r) zu bewegen.

2. Vorrichtung nach Anspruch 1, **dadurch gekennzeichnet, dass** die Hauptoberrolle (111r), die Hauptunterrolle (211r) oder beide beweglich an der Vorrichtung befestigt sind und dazu ausgelegt sind, nacheinander und voneinander bewegt zu werden, um einen Zwischenraum zwischen der Hauptoberrolle und der Hauptunterrolle einzustellen.

3. Vorrichtung nach Anspruch 2, **dadurch gekennzeichnet, dass** die Hauptoberrolle (111r) drehbar auf einer Welle (111), die exzentrisch an einer Skalenscheibe (120) des oberen Teils (100) befestigt ist, angeordnet ist, wobei der zwischen der Hauptoberrolle (111r) und der Hauptunterrolle (211r) vorgesehene Zwischenraum so gestaltet ist, dass er durch Drehung der Skalenscheibe (120) eingestellt werden kann.

4. Vorrichtung nach einem der vorhergehenden Ansprüche, **dadurch gekennzeichnet, dass** die Riemenscheibenrolle (213r) über Radgetrieben (213g, 218g) mit einer Antriebswelle (216) verbunden ist, und die Antriebswelle (216) drehbar durch die erste untere Seite (201) oder die zweite untere Seite (202) angeordnet ist.

5. Vorrichtung nach Anspruch 4, **dadurch gekennzeichnet, dass** die Antriebswelle (216) durch die erste untere Seite (201) oder die zweite untere Seite (202) mit einer Eingangswelle (215) verbunden ist, und die Eingangswelle dazu gestaltet ist, mittels einer Akku-Bohrmaschine oder einer elektrischen Bohrmaschine gedreht werden.

6. Vorrichtung nach einem der vorhergehenden Ansprüche, **dadurch gekennzeichnet, dass** der obere Teil (100) mittels Schnelllösemechanismen (130, 131, 132) an der ersten oberen Seite (101)und an der zweiten Oberseite (201) abnehmbar mit dem unteren Teil (200) verbindet wird.

7. Vorrichtung nach einem der vorhergehenden Ansprüche, **dadurch gekennzeichnet, dass** der obere Teil (100) mittels lösbarer Scharniere (130, 131, 132, 230) zwischen dem oberen Teil (100) und dem unteren Teil (200) mit dem unteren Teil (200) verbindet wird.

8. Vorrichtung nach Anspruch 6 oder 7, **dadurch gekennzeichnet, dass** die Schnelllösemechanismen und die lösbaren Scharniere Öffnungen (131) am oberen Teil (100), Öffnungen (230) am unteren Teil und Stifte (132) umfassen, wobei sich jede Stift (132) durch die Öffnung (131) am oberen Teil (100) erstreckt, und dazu geeignet ist, in die Öffnung (230) am unteren Teil (200) eingeführt und aus der Öffnung (230) am untere Teil (200) entfernt zu werden.

9. Vorrichtung nach Anspruch 8, **dadurch gekennzeichnet, dass** das obere Teil (100) vier Öffnungen (131), zwei auf der ersten oberen Seite (101) und zwei auf der zweiten oberen Seite (102), aufweist, wobei die Öffnungen (131) weiter von der Hauptoberrolle (111r) entfernt als jede der Oberrollen (111r, 112r, 113r) liegen.

10. Vorrichtung nach einem der vorhergehenden Ansprüche, **dadurch gekennzeichnet, dass** der Oberriemen (110) oder der Unterriemen (210) auf der den Rollen (111r, 112r, 113r, 211r, 212r, 213r) zugewendeten Innenfläche, der Außenfläche oder sowohl der Innenfläche als auch der Außenfläche eine Gleitschutzbeschichtung aufweist.

11. Vorrichtung nach Anspruch 10, **dadurch gekennzeichnet, dass** die Gleitschutzbeschichtung Silikon, Gummi oder Polyurethan umfasst.

## Revendications

1. Dispositif (10} destiné à préparer un revêtement destiné à être installé dans une canalisation, le dispositif comprenant une partie supérieure (100) qui comporte un rouleau supérieur principal (111r) et deux rouleaux supérieurs auxiliaires (112r, 113r) sur des côtés différents du rouleau supérieur principal (111r), les rouleaux supérieurs (111r, 112r, 113r) s'étendant entre un premier côté supérieur (101) et un deuxième côté supérieur (102) et comportant une courroie supérieure (110) disposée sur les rouleaux supérieurs (111r, 112r, 113r), le dispositif comprenant en outre une partie inférieure (200) comportant un rouleau inférieur principal (211r), un rouleau inférieur auxiliaire (212r) et un rouleau de poulie (213r), ledit rouleau inférieur auxiliaire (212r) et le rouleau de poulie (213r) étant situés sur des côtés différents du rouleau inférieur principal (211r), les rouleaux inférieurs (211r, 212r, 213r) s'étendant entre un premier côté inférieur (201) et un deuxième côté inférieur (202) et comportant une courroie inférieure (210) disposée sur les rouleaux inférieurs (211r, 212r, 213r), le rouleau de poulie (213r) étant conçu pour entraîner la courroie inférieure (210) lorsqu'il tourne, **caractérisé en ce qu'**un rouleau supérieur auxiliaire (113r) tourne sur un arbre (113) dont les extrémités sont situées dans des fentes (142) des côtés supérieurs (101, 102), lesdites extrémités d'arbre sont accessibles à travers des cavités (143) afin de déplacer l'arbre (113) et déplacer ainsi ledit rouleau supérieur auxiliaire (113r) vers l'autre rouleau supérieur auxiliaire (112r) et l'écarter de celui-ci, et le rouleau inférieur auxiliaire (212r) tourne sur un arbre (212) dont les extrémités sont situées dans des fentes (242) des côtés inférieurs (201, 202), lesdites extrémités d'arbre étant accessibles à travers des cavités (243) afin de déplacer l'arbre (212) et déplacer ainsi ledit rouleau inférieur auxiliaire (212r) vers le rouleau de poulie (213r) et l'écarter de celui-ci.

2. Dispositif selon la revendication 1, **caractérisé en ce que** le rouleau supérieur principal (111r), le rouleau inférieur principal (211r) ou les deux sont fixés de manière mobile au dispositif et sont conçus pour être rapprochés et écartés l'un de l'autre afin d'ajuster un espace ménagé entre le rouleau supérieur principal et le rouleau inférieur principal.

3. Dispositif selon la revendication 2, **caractérisé en ce que** le rouleau supérieur principal (111r) est disposé de façon à tourner sur un arbre (111) qui est fixé de manière excentrique à un cadran rotatif (120) de la partie supérieure (100), l'espace ménagé entre le rouleau supérieur principal (111r) et le rouleau inférieur principal (211r) étant conçu pour être ajusté par rotation dudit cadran (120).

4. Dispositif selon l'une quelconque des revendications précédentes, **caractérisé en ce que** le rouleau de poulie (213r) est relié à un arbre d'entraînement (216) par des engrenages (213g, 218g) et l'arbre d'entraînement (216) est disposé de façon à être entraîné en rotation à travers le premier côté inférieur (201) ou le deuxième côté inférieur (202).

5. Dispositif selon la revendication 4, **caractérisé en ce que** l'arbre d'entraînement (216) est relié à un arbre d'entrée (215) à travers le premier côté inférieur (201) ou le deuxième côté inférieur (202) et l'arbre d'entrée est conçu pour être mis en rotation avec une perceuse sans fil ou une perceuse électrique.

6. Dispositif selon l'une quelconque des revendications précédentes, **caractérisé en ce que** la partie supérieure (100) est fixée de manière amovible à la partie inférieure (200) à l'aide de mécanismes de libération rapide (130, 131, 132) sur le premier côté supérieur (101) et sur le deuxième côté supérieur (201).

7. Dispositif selon l'une quelconque des revendications précédentes, **caractérisé en ce que** la partie supérieure (100) est fixée de manière amovible à la partie inférieure (200) à l'aide de charnières libérables (130, 131, 132, 230) entre ladite partie supérieure (100) et la partie inférieure (200).

8. Dispositif selon la revendication 6 ou 7, **caractérisé en ce que** lesdits mécanismes de libération rapide et lesdites charnières libérables comprennent des ouvertures (131) sur la partie supérieure (100), des ouvertures [230] sur la partie inférieure et des broches (132), chaque broche (132) s'étendant à travers ladite ouverture (131) sur la partie supérieure (100) et étant conçue pour être insérée dans ladite ouverture (230) sur la partie inférieure (200) et être retirée de ladite ouverture (230) sur la partie inférieure (200).

9. Dispositif selon la revendication 8, **caractérisé en ce que** la partie supérieure (100) comporte quatre ouvertures (131), deux sur le premier côté supérieur (101) et deux sur le deuxième côté supérieur (102), lesdites ouvertures (131) étant situées plus loin du rouleau supérieur principal (111r) que n'importe lequel des rouleaux supérieurs (111r, 112r, 113r).

10. Dispositif selon l'une quelconque des revendications précédentes, **caractérisé en ce que** la courroie supérieure (110) ou la courroie inférieure (210) comporte un revêtement antidérapant sur la surface intérieure dirigée vers les rouleaux (111r, 112r, 113r, 211r, 212r, 213r), la surface extérieure ou à la fois la surface intérieure et la surface extérieure.

11. Dispositif selon la revendication 10, **caractérisé en ce que** le revêtement antidérapant comprend du silicone, du caoutchouc ou du polyuréthane.
